# EUROPÄISCHE PATENTSCHRIFT

(11) **EP 1 091 820 B1**
(45) Veröffentlichungstag und Bekanntmachung des Hinweises auf die Patenterteilung: **23.06.2004**
(21) Anmeldenummer: 00925241.2
(22) Anmeldetag: 26.04.2000
(51) Int. Cl.: B23B 29/24

(54) **WERKZEUGTRÄGER FÜR WERKZEUGMASCHINEN UND WERKZEUGANORDNUNG FÜR WERKZEUGMASCHINEN**
TOOL HOLDER FOR MACHINE TOOLS AND TOOL SYSTEM FOR MACHINE TOOLS
PORTE-OUTILS POUR MACHINES-OUTILS ET AGENCEMENT D'OUTILS POUR MACHINES-OUTILS

(30) Priorität: 28.04.1999 DE 19919236
(43) Veröffentlichungstag der Anmeldung: 18.04.2001
(73) Patentinhaber: Traub Drehmaschinen GmbH, 73262 Reichenbach (DE)
(72) Erfinder: FORST, Heinz, D-73773 Aichwald (DE); KÖNEKE, Rainer, D-73230 Kirchheim/Teck (DE); SONNEK, Werner, D-73669 Lichtenwald (DE)
(74) Vertreter: HOEGER, STELLRECHT & PARTNER Patentanwälte
(86) Internationale Anmeldenummer: PCT/EP2000/003718
(87) Internationale Veröffentlichungsnummer: WO 2000/066303

(56) Entgegenhaltungen:
- EP-A- 0 799 663

## Beschreibung

Die Erfindung betrifft eine Werkzeuganordnung für Werkzeugmaschinen gemäß dem Oberbegriff von Anspruch 1 und einen Werkzeugträger für Werkzeugmaschinen gemäß dem Oberbegriff von Anspruch 36.

Derartige Werkzeuganordnungen sind beispielsweise aus der EP 0 799 663 bekannt.

Bei dieser Lösung ist allerdings die Festspanneinrichtung mit einer Spannschraube versehen, die aufwendig zu betätigen ist.

Der Erfindung liegt daher die Aufgabe zugrunde, eine Werkzeuganordnung der gattungsgemäßen Art derart zu verbessern, daß ein Festspannen eines Werkzeughalters in möglichst einfacher Art und Weise möglich ist.

Diese Aufgabe wird bei einer Werkzeuganordnung der eingangs beschriebenen Art erfindungsgemäß dadurch gelöst, daß das Festspannelement der Festspanneinrichtung um eine Achse drehbar im Haltekörper gelagert ist und eine auf einer Bahn um die Achse bewegbare Keilfläche zum Einwirken auf den Festspannkörper trägt und daß die Keilfläche des Festspannelements ausgehend von einer Einsetzstellung beim Drehen in einer ersten Drehrichtung den Festspannkörper übergreift und diesen zunehmend in der Spannrichtung verschiebend beaufschlagt.

Der Vorteil der erfindungsgemäßen Erfindung ist darin zu sehen, daß mit dieser in einfacher Weise ein Festspannen des Werkzeughalters möglich ist, da zum Festspannen des Festspannkörpers mittels der Festspanneinrichtung eine Drehung des Festspannelements um weniger als 360° ausreichend ist.

Damit ist mit einer einfachen Drehbewegung des Festspannelements ein Festspannen des Werkzeughalters realisierbar.

Prinzipiell besteht die Möglichkeit, das Festspannelement an beliebiger Stelle anzuordnen. Um besonders einfach auf den Werkzeughalter einwirken zu können, und insbesondere eine einfache Einsetzbewegung des Werkzeughalters zu gewährleisten, ohne daß beispielsweise antriebsseitig des Werkzeughalters das Festspannelement angeordnet ist, ist vorgesehen, daß das Festspannelement in einem die Stützflächen tragenden Bereich des Haltekörpers angeordnet ist.

Eine besonders vorteilhafte Anordnung des Festspannelements sieht vor, daß dieses auf einer dem Werkzeughalter gegenüberliegenden Seite einer der Stützflächen im Haltekörper angeordnet ist.

Die drehbare Lagerung des Festspannelements kann dabei in unterschiedlichster Ausrichtung desselben erfolgen. Eine vorteilhafte Lösung sieht vor, daß das Festspannelement um eine quer zu der Stützfläche verlaufende Achse drehbar ist.

Die Lagerung des Festspannelements erfolgt günstigerweise so, daß dieses in einer den Haltekörper durchsetzenden Bohrung drehbar gelagert ist.

Hinsichtlich der Anordnung der Spannkulisse sind die unterschiedlichsten Möglichkeiten denkbar. Eine vorteilhafte Art der Anordnung sieht vor, daß das Festspannelement derart bewegbar ist, daß die Keilfläche den Einsetzweg des Festspannkörpers kreuzt.

Besonders günstig ist es dabei, wenn die Keilfläche in der Einsetzstellung des Festspannelements außerhalb eines Einsetzwegs des Festspannkörpers angeordnet ist, welchen dieser beim Einsetzen des Werkzeughalters in den Werkzeugträger beschreibt, und wenn sich die Keilfläche nach Drehung des Festspannelements in der ersten Richtung mit dem den Festspannkörper beaufschlagenden Bereich quer zu diesem Einsetzweg erstreckt.

Damit läßt sich der Werkzeughalter besonders einfach einsetzen und auch das Einsetzen erfolgt ohne Behinderung und Rücksichtnahme auf die zum Festspannen eingesetzte Keilfläche.

Besonders vorteilhaft ist es, wenn das Feststellspannelement so angeordnet ist, daß es in der Lage ist, auf den in einem gegenüber einer der Stützflächen vertieft im Haltekörper angeordneten Einführkanal einführbaren Festspannkörper zu wirken.

Eine besonders günstige Lösung für das Einsetzen des Werkzeughalters sieht vor, daß der Haltekörper so ausgebildet ist, daß er einen geradlinigen Einsetzweg für den Festspannkörper und somit auch den Werkzeughalter zuläßt.

Besonders günstig ist es dabei, wenn der Einsetzweg parallel zu einer der Stützflächen verläuft.

Hinsichtlich der Drehbewegung, die erforderlich ist, um den Werkzeughalter festzuspannen wurde bislang lediglich davon ausgegangen, daß eine Drehung des Festspannelements um weniger als 360° erforderlich ist. Besonders günstig ist es, wenn das Festspannelement zum Spannen des Werkzeughalters um einen Winkel von weniger als 270°, noch besser weniger als 180° drehbar ist.

Bislang wurde nicht näher darauf eingegangen, wie die Keilfläche ausgebildet und am Festspannelement angeordnet sein soll. Eine besonders vorteilhafte konstruktive Lösung sieht vor, daß das Festspannelement eine die Keilfläche tragende Spannkulisse umfaßt.

Vorzugsweise ist dabei die Spannkulisse sichelförmig gebogen ausgeführt, so daß auch entsprechend die Keilfläche sichelförmig gebogen ist und sich in einfacher Weise durch Drehung des Festspannelements in Anlage an den Festspannkörper bringen läßt.

Um insbesondere das Einsetzen des Werkzeughalters zu erleichtern, ist vorzugsweise vorgesehen, daß das Festspannelement eine vor einem Anfangsbereich der Spannkulisse liegende Ausnehmung aufweist, durch welche der Festspannkörper bei seiner Bewegung in Einsetzrichtung in den Wirkungsbereich der Spannkulisse bringbar ist. Vorzugsweise ist dabei die Spannkulisse somit nicht als kreisförmig geschlossene Kulisse ausgebildet, sondern weist auf einer Seite eine Öffnung auf, welche vorzugsweise bei in Einsetzstellung stehendem Festspannelement mit dem Einsetzweg des Festspannkörpers fluchtend angeordnet ist.

Prinzipiell wäre es bei der erfindungsgemäßen Lösung denkbar, die Spannkulisse an einer Außenmantelfläche eines drehbaren Körpers, beispielsweise in Form eines Kamms mit einer dem Körper abgewandt liegenden Keilfläche auszubilden.

Eine konstruktiv besonders günstige und insbesondere raumsparende Lösung sieht jedoch vor, daß die Spannkulisse die Keilfläche auf einer der Achse des Festspannelements zugewandten Seite trägt.

Eine für die Herstellung eines Festspannelements besonders einfache Lösung sieht vor, daß das Festspannelement einen Hohlzylinder umfaßt, welcher mit einem Wandabschnitt die Spannkulisse bildet, wobei insbesondere im Fall einer Ausnehmung vor dem Anfangsbereich der Spannkulisse der Wandabschnitt kein geschlossener zylindrischer Wandabschnitt ist, sondern sich nur über einen Winkelbereich von weniger als 360° erstreckt.

Besonders günstig für ein sicheres Festspannen des Werkzeughalters ist es, wenn die Keilfläche als selbsthemmende Keilfläche ausgebildet ist.

Hinsichtlich der Ausrichtung der Stützflächen und des Festspannelements relativ zueinander wurden bislang keine näheren Angaben gemacht. Prinzipiell bestehen keine Begrenzungen, solange der Festspannkörper in den Wirkungsbereich des Festspannelements bringbar ist.

Eine besonders günstige Lösung sieht vor, daß die Stützflächen und das Festspannelement derart relativ zueinander angeordnet sind, daß der Werkzeughalter durch eine Bewegung längs eines geradlinigen Einsetzwegs mit dem ersten und dem zweiten Stützbereich an den entsprechenden Stützflächen anlegbar und mit dem Festspannkörper in den Wirkungsbereich des Festspannelements bringbar ist.

Konstruktiv läßt sich dies in beliebiger Art und Weise realisieren. Beispielsweise wäre es denkbar, daß das Festspannelement über eine der Stützflächen übersteht und beispielsweise der entsprechende Stützbereich des Werkzeughalters in zwei Teilbereiche unterteilt ist.

Eine besonders günstige Lösung sieht vor, daß eine Stützfläche des Haltekörpers Teilflächen aufweist, die beiderseits eines sich in der Einführrichtung erstreckenden Einführkanals für den Festspannkörper liegen.

Um dem Einführkanal für den Festspannkörper eine möglichst große Länge geben zu können, ist vorzugsweise vorgesehen, daß beide Stützflächen des Haltekörpers geteilt sind und jede der Stützflächen beiderseits des Einführkanals für den Festspannkörper liegende Teilflächen aufweist.

Hinsichtlich des Verlaufs der Spannrichtung wurden im Zusammenhang mit der bisherigen Erläuterung der einzelnen Ausführungsbeispiele keine näheren Angaben gemacht. So wäre es beispielsweise denkbar, die Spannrichtung entweder parallel zur einen Stützfläche oder parallel zur anderen Stützfläche verlaufen zu lassen. Um ein festes und möglichst mit hohen Kräften beaufschlagtes Anliegen an beiden Stützflächen zu gewährleisten, ist vorzugsweise vorgesehen, daß die Spannrichtung parallel zu einer Richtung verläuft, die innerhalb des von den Stützflächen begrenzten Winkelbereichs liegt. Vorzugsweise hat dabei die Spannrichtung einen derartigen Verlauf, daß sie ungefähr parallel zu einer Winkelhalbierenden des Winkels zwischen den Stützflächen ausgerichtet ist.

Damit ein exaktes Ausrichten des Haltekörpers möglich ist, ist dieser vorzugsweise mit mindestens einer parallel zur X-Richtung der jeweiligen Werkzeugmaschine auszurichtenden Meßfläche versehen, wobei vorzugsweise eine der Stützfläche die Meßfläche bildet.

Hinsichtlich des Aufbaus des erfindungsgemäßen Werkzeugträgers wurden bislang keine näheren Angaben gemacht. Beispielsweise wäre es denkbar, den Haltekörper und die Grundeinheit durch Fügen fest miteinander zu verbinden.

Eine besonders günstige Lösung sieht jedoch vor, daß der Haltekörper kraftschlüssig mit der Grundeinheit verbunden ist. Diese Lösung hat den Vorteil, daß beispielsweise im Fall einer Kollision eines vom Haltekörper getragenen Werkzeugs in der Werkzeugmaschine der Haltekörper die Möglichkeit hat, sich relativ zur Grundeinheit, die entweder fest auf der Werkzeugmaschine oder fest auf einem Schlitten der Werkzeugmaschine angeordnet ist, zu verschieben und somit weiterführende Beschädigungen beispielsweise im Bereich der Grundeinheit oder der Aufnahme der Grundeinheit an einem Schlitten vermieden werden. Darüber hinaus hat die kraftschlüssige Verbindung die Möglichkeit, daß diese gelöst werden kann, um wiederum den Haltekörper in der gewünschten Ausrichtung zur Grundeinheit kraftschlüssig zu fixieren.

Um jedoch eine definierte Ausrichtung des Haltekörpers relativ zur Grundeinheit trotz der kraftschlüssigen Verbindung der beiden miteinander zu erhalten, ist vorzugsweise vorgesehen, daß die Grundeinheit und der Haltekörper durch Formelemente relativ zueinander definiert ausrichtbar sind und daß die Formschlußelemente gegen eine Relativbewegung zueinander kraftschlüssig fixiert sind. Damit ist einerseits durch die Formschlußelemente eine definierte Ausrichtung möglich, andererseits durch eine Relativbewegung der Formschlußelemente zueinander unter Überwindung des Kraftschlusses zwischen diesen immer noch ein Ausweichen des Haltekörpers gegenüber der Grundeinheit möglich.

Eine besonders günstige Möglichkeit der Erzeugung einer kraftschlüssigen Verbindung zwischen Grundeinheit und Haltekörper sieht vor, daß die Grundeinheit und der Haltekörper durch an der Grundeinheit und am Haltekörper angreifende Spannpratzen kraftschlüssig aneinander fixiert sind.

Um ein optimales Verspannen von Grundeinheit und Haltekörper zu erreichen, ist vorzugsweise im Bereich mindestens einer Angriffstelle der Spannpratzen eine Schrägfläche vorgesehen, durch welche die Spannpratzen eine den Kraftschluß bewirkende Kraft erzeugen.

Prinzipiell wäre es denkbar, aus der Grundeinheit und dem Haltekörper beispielsweise einen Linearwerkzeugträger aufzubauen, wobei an dem Haltekörper die einzelnen Werkzeughalter sitzen und bei einer Kollision eine Verschiebung des Haltekörpers relativ zu der Grundeinheit erfolgt.

Eine besonders vorteilhafte Art eines erfindungsgemäßen Werkzeugträgers sieht vor, daß die Grundeinheit als Trägerwelle und der Haltekörper als Werkzeugscheibe eines Werkzeugrevolvers ausgebildet sind.

Besonders vorteilhaft ist es beim Vorsehen einer Trägerwelle und einer Werkzeugscheibe, wenn diese bezüglich der Drehachse des Revolvers durch Formschlußelemente sowohl in axialer Richtung zur Drehachse als auch in radialer Richtung zur Drehachse definiert zueinander positionierbar sind und die kraftschlüssige Verbindung zwischen der Werkzeugscheibe und der Trägerwelle lediglich die drehfeste Verbindung zwischen beiden betrifft, so daß bei einer Kollision eine Relativverdrehung der Werkzeugscheibe gegenüber der Trägerwelle erfolgt.

Besonders günstig ist es bei dieser Lösung, wenn die Trägerwelle als Hohlwelle ausgebildet ist und wenn die Spannpratzen in radialer Richtung der Hohlwelle wirksam sind, um die Werkzeugscheibe und die Hohlwelle in axialer Richtung zu verspannen.

Um einen möglichst guten Kraftschluß zu erhalten, ist es besonders günstig, wenn die Spannpratzen als Teile eines Profilrings geformt sind.

Eine besonders vorteilhafte Möglichkeit zum Spannen der Spannpratzen sieht vor, daß ein Spannelement für diese von außerhalb der Hohlwelle zugänglich ist.

Eine weitere Ausführungsform betrifft ferner noch eine Werkzeuganordnung, umfassend einen Werkzeughalter mit einem Werkzeughaltergehäuse, welches einen ersten und einen zweiten Stützbereich aufweist, die in einem spitzen Winkel zueinander verlaufen und an entsprechenden Stützflächen eines Haltekörpers eines Werkzeugträgers anlegbar sind, und welches einen Festspannkörper trägt, auf weichen eine Festspanneinrichtung des Werkzeugträgers beim Festspannen des Werkzeughalters an diesem einwirkt.

Eine besonders vorteilhafte Ausbildung einer derartigen Werkzeuganordnung sieht dabei vor, daß der Haltekörper mit einem Ausrichtelement zum exakten Positionieren des Werkzeughalters in der jeweiligen Station versehen ist und daß der Werkzeughalter eine mit dem Ausrichtelement in Eingriff bringbare Ausrichteinrichtung aufweist, so daß durch die Ausrichteinrichtung im Zusammenwirken mit dem Ausrichtelement eine exakte Position des Werkzeughalters relativ zum Haltekörper festlegbar ist.

Eine besonders günstige Lösung sieht dabei vor, daß die Ausrichteinrichtung mit einem voreinstellbaren Stellelement verbunden ist, welches mit dem Ausrichtetement zusammenwirkt, um eine exakte Ausrichtung entsprechend der Voreinstellung zu erhalten.

Insbesondere ist der Festspannkörper so angeordnet, daß er über einen der Stützbereiche vom Werkzeughattergehäuse weg übersteht.

Eine besonders vorteilhafte Ausbildung des Festspannkörpers für den erfindungsgemäßen Werkzeughalter sieht vor, daß der Festspannkörper einen Kopf mit einer sich konisch zum Werkzeughaltergehäuse hin verjüngenden Auflagefläche aufweist.

Ein derartiger Kopf läßt die Möglichkeit zu, das Werkzeughaltergehäuse so zu beaufschlagen, daß beide Stützbereiche an den am Werkzeugträger vorgesehenen Stützflächen kraftbeaufschlagt anliegen.

Eine besonders vorteilhafte Lösung sieht vor, daß ein erster der Stützbereiche durch eine Planfläche des Werkzeughaltergehäuses gebildet ist.

Alternativ oder ergänzend dazu sieht ein weiteres vorteilhaftes Ausführungsbeispiel vor, daß der zweite Stützbereich durch eine an einer Nase des Werkzeughaltergehäuses angeordnete Fläche gebildet ist.

Um in vorteilhafter Weise ein möglichst definiertes Ausrichten des Werkzeughalters relativ zum Werkzeugträger zu erreichen, ist vorteilhafterweise vorgesehen, daß der zweite Stützbereich in zwei Teilbereiche geteilt ist, so daß durch den zweigeteilten zweiten Stützbereich und den ersten Stützbereich die Möglichkeit einer sogenannten "Dreipunktauflage" zur eindeutig definierten Fixierung des Werkzeughalters am Werkzeugträger gegeben ist.

Eine besonders vorteilhafte Ausbildung des erfindungsgemäßen Werkzeughalters sieht vor, daß dieser mit einer Ausrichteinrichtung versehen ist, welche mit einem Ausrichtelement am Werkzeugträger in Wechselwirkung bringbar ist.

Mit einer derartigen Ausrichteinrichtung besteht die Möglichkeit, eine definierte Orientierung des Werkzeughalters einstellbar vorzugeben.

Besonders günstig ist dies dann erreichbar, wenn die Ausrichteinrichtung ein voreinstellbares Element umfaßt.

Vorzugsweise ist der erfindungsgemäße Werkzeughalter so ausgebildet, daß er auf einen Werkzeugträger nach einem der voranstehend beschriebenen Ausführungsbeispiele aufsetzbar ist.

Ferner betrifft die Erfindung einen Werkzeugträger für Werkzeugmaschinen gemäß Anspruch 36 sowie vorteilhafte Weiterbildungen desselben gemäß den Ansprüchen 37 bis 57.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Schnitt durch einen Werkzeugträger längs Linie 1-1 in Fig. 2 bei montiertem Werkzeughalter, jedoch nicht vorhandenem Ausrichtelement;
- Fig. 2: eine Draufsicht auf einen erfindungsgemäßen Werkzeugträger mit montiertem Werkzeughalter in Richtung des Pfeils A in Fig. 1;
- Fig. 3: einen Schnitt durch einen Werkzeughalter längs Linie 3-3 in Fig. 4;
- Fig. 4: eine Draufsicht auf einen Werkzeughalter in Richtung des Pfeils B in Fig. 3;
- Fig. 5: eine vergrößerte Darstellung eines Bereichs X in Fig. 1 mit einem in einer Einsetzstellung stehendem Festspannelement;
- Fig. 6: eine Darstellung entsprechend Fig. 5 mit einem den Werkzeughalter festspannenden Festspannelement;
- Fig. 7: einen Schnitt ähnlich Fig. 1 durch eine Variante der erfindungsgemäßen Werkzeugträgeranordnung für rotierend angetriebene Werkzeuge.

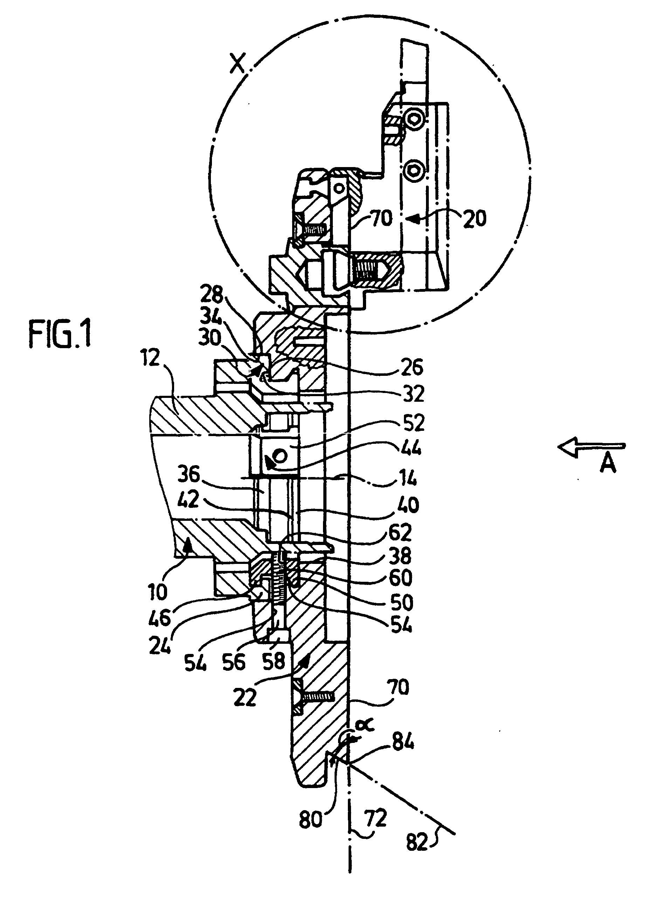

Eine Ausführungsform einer erfindungsgemäßen Werkzeuganordnung, dargestellt in Fig. 1, - ausgebildet als Revolver - umfaßt eine als Ganzes mit 10 bezeichnete Grundeinheit, welche beispielsweise als um eine Achse 14 drehbare Trägerwelle 12 an einer Werkzeugträgeraufnahme gehalten ist. An der Grundeinheit 10 ist als Haltekörper für Werkzeughalter 20 eine Werkzeugscheibe 22 lösbar gehalten.

Zum Halten der Werkzeugscheibe 22 ist die Grundeinheit 10 mit einem Tragflansch 24 versehen, der eine in einer Ebene senkrecht zur Achse 14 liegende Stirnfläche 26 und eine azimutal um die Achse 14 umlaufende, vorzugsweise kreiszylindrisch zur Achse 14 ausgebildete Mantelfläche 28 aufweist. Der Tragflansch 24 greift dabei in eine stufenförmig ausgebildete Tragflanschaufnahme 30 der Werkzeugscheibe 22 ein, welche eine Grundfläche 32 aufweist, die ebenfalls in einer Ebene senkrecht zur Achse 14 verläuft und an die Stirnfläche 26 des Tragflansches 24 anlegbar ist, sowie eine Zentrierfläche 34 aufweist, die azimutal um die Achse 14 umläuft und vorzugsweise als Mantelfläche eines Kreiszylinders ausgebildet ist und an der Mantelfläche 28 des Tragflansches 24 anlegbar ist.

Die Stirnfläche 26 und die Mantelfläche 28 sowie die Grundfläche 32 und die Zentrierfläche 34 sind vorzugsweise so ausgebildet, daß der Tragflansch 24 in der Tragflanschaufnahme 30 in Form einer Passung aufgenommen und somit die Werkzeugscheibe 22 in präziser Ausrichtung relativ zur Grundeinheit 10 gehalten ist.

Um die Werkzeugscheibe 22 an der Grundeinheit 10 drehfest zu fixieren, ist auf einer der Achse 14 zugewandten Innenseite des Tragflansches 24 eine zur Achse 14 hin offene Haltenut 36 angeordnet und im Bereich eines zentralen Durchbruchs 38 der Werkzeugscheibe 22 nahe der Tragflanschaufnahme 30 eine ebenfalls zur Achse 14 hin offene Haltenut 40 angeordnet, wobei beide Haltenuten 36 und 40 in ungefähr gleich großem radialem Abstand von der Achse 14 in der Grundeinheit 10 bzw. der Werkzeugscheibe 22 umlaufen.

Dabei weist vorzugsweise eine der Haltenuten 36 oder 40, im in Fig. 1 dargestellten Fall die Haltenut 40, eine der anderen Haltenut 36 zugewandte schrägliegende Wandfläche 42 auf, so daß sich die Haltenut 40 zur Achse 14 hin erweitert.

Mit den Haltenuten 36 und 40 sind Spannpratzen 44 in Eingriff bringbar, welche in die Haltenuten 36 und 40 eingreifende Finger 46 bzw. 50 aufweisen, die von einem Spannpratzenkörper 52 abstehen.

Dabei ist zumindest der in die Haltenut 40 eingreifende Finger 50 mit einer dem Finger 46 zugewandt liegenden Schrägfläche 54 versehen, welche an der schrägen Nutwand 42 der Haltenut 40 anlegbar ist. Dabei sind die Finger 46 und 50 so ausgebildet und relativ zueinander ausgerichtet, daß ein Einpressen der Finger 46 und insbesondere des Fingers 50 in die Haltenuten 36 bzw. 40 durch Beaufschlagen des Spannpratzenkörpers 52 in radial zur Achse 14 nach außen weisender Richtung zu einer kraftschlüssigen drehfesten Verbindung zwischen der Grundeinheit 10 und der Werkzeugscheibe 22 führt, da die Stirnfläche 26 und die Grundfläche 32 gegeneinander verspannt werden.

Um die Spannpratzen 44 in radialer Richtung zur Achse 14 nach außen zu beaufschlagen, ist die Werkzeugscheibe 22 mit in radialer Richtung zur Achse 14 verlaufenden Bohrungen 54 versehen, welche von Spannschrauben 56 durchsetzt sind, deren Kopf 58 auf einer den Spannpratzen 44 gegenüberliegenden Seite liegt und von einer Außenseite der Werkzeugscheibe 22 her zugänglich ist und deren Gewindeabschnitt 60 in einen Gewindeabschnitt 62 im Spannpratzenkörper 52 einschraubbar ist, so daß mit diesen Spannschrauben 56 die Spannpratzen 44 radial zur Achse 14 nach außen gegen die Werkzeugscheibe 22 verspannbar sind.

Vorzugsweise sind die Spannpratzen 44 als Segmente eines Ringkörpers mit die Finger 46, 50 bildenden Ringwulsten hergestellt.

Mit dieser Lösung ist einerseits erreicht, daß die Werkzeugscheibe 22 an der Grundeinheit 10 über die mit dem Tragflansch 24 zusammenwirkende Tragflanschaufnahme 30 in radialer Richtung zur Achse 14 und gegenüber einem Kippen zur Achse 14 exakt ausgerichtet und formschlüssig gehalten ist, während die drehfeste Verbindung zwischen der Grundeinheit 10 und der Werkzeugscheibe nur kraftschlüssig erfolgt, so daß bei einer Kollision des Werkzeugträgers innerhalb der Werkzeugmaschine, beispielsweise eine Kollision eines der Werkzeughalter 20 mit anderen Teilen der Werkzeugmaschine die Möglichkeit besteht, daß sich die Werkzeugscheibe 22 gegenüber der Grundeinheit 10 aufgrund eines Lösens der kraftschlüssigen drehfesten Verbindung verdreht und somit Beschädigungen im Bereich der Grundeinheit 10 vermieden werden können und nach Lösen der Spannschrauben 56 ein erneutes exaktes Ausrichten der Drehstellung der Werkzeugscheibe 22 relativ zur Grundeinheit 10 erfolgen kann.

Zur Aufnahme der Werkzeughalter 20 umfaßt die Werkzeugscheibe 22 für jeden Werkzeughalter 20 eine erste Stützfläche 70, welche in einer Ebene 72 liegt, die in diesem Fall senkrecht zur Achse 14 verläuft.

Ferner umfaßt die Werkzeugscheibe zur Aufnahme jedes Werkzeughalters 20 eine zweite Stützfläche 80, welche einen ringförmig azimutal um die Achse 14 umlaufenden Ausschnitt aus einer Mantelfläche 82 eines zur Achse 14 koaxialen und radialsymmetrischen Konus darstellt und somit in einem spitzen Winkel α zur ersten Stützfläche 70 verläuft. Vorzugsweise erstreckt sich die erste Stützfläche 70 in radialer Richtung zur Achse 14 bis zu einer kreisförmigen Begrenzungslinie 84 um die Achse 14, welche auf der Konusfläche 82 liegt und auch die zweite Stützfläche 80 begrenzt.

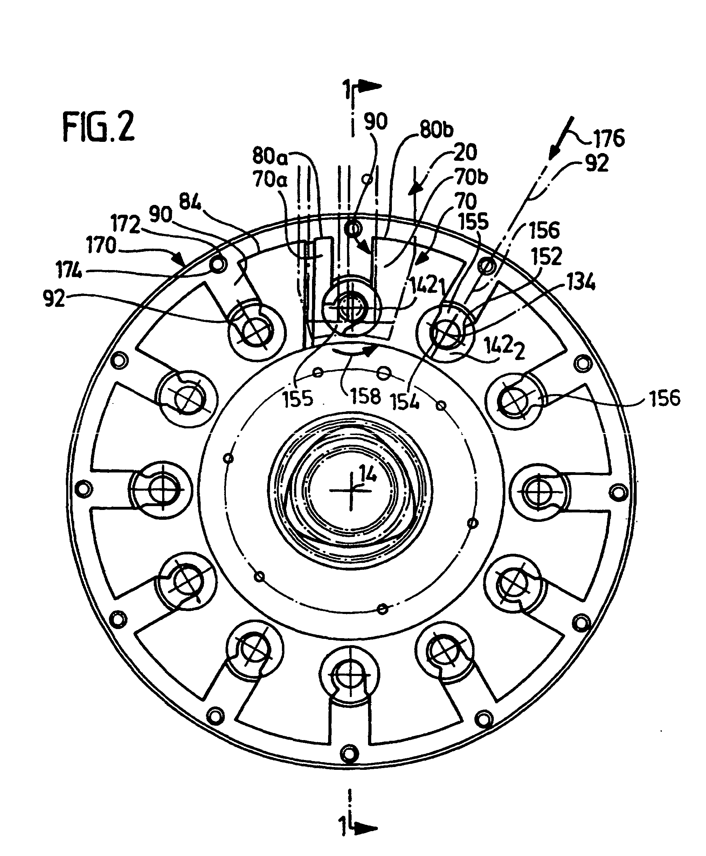

Wie in Fig. 2 dargestellt, ist für jeden der Werkzeughalter 20 die erste Stützfläche 70 zweigeteilt in eine Stützfläche 70a und eine Stützfläche 70b, die beiderseits eines gegenüber der Stützfläche 70 vertieft angeordneten Einführkanals 90 liegen und außerdem ist auch die zweite Stützfläche 80 durch den Einführkanal in zwei Teilflächen 80a und 80b getrennt.

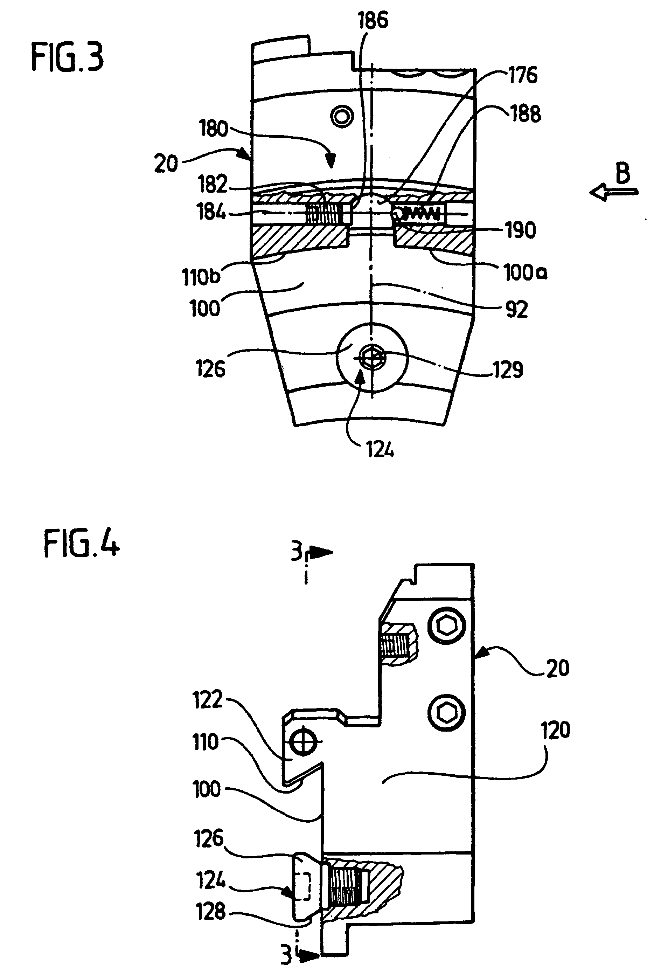

Jeder der Werkzeughalter 20 weist nun, wie in Fig. 1, 3 und 4 dargestellt, einen ersten Stützbereich 100 auf, welcher an der ersten Stützfläche 70, insbesondere den beiden Teilflächen 70a und 70b, anlegbar ist sowie einen zweiten Stützbereich 110, welcher in zwei Teilbereiche 110a und 110b aufgeteilt ist.

Vorzugsweise ist dabei der erste Stützbereich 100 eine plane Fläche, welche an einem Werkzeughaltergehäuse 120 vorgesehen ist und der zweite Stützbereich 110 ist vorzugsweise gebildet durch eine im spitzen Winkel **α** zur Planfläche 100 verlaufende und an einer Nase 122 des Werkzeughaltergehäuses 120 angeordnete Schrägfläche, welche insbesondere einen Ausschnitt aus einer der Konusfläche 82 entsprechenden Konusfläche darstellt.

Somit ist der Werkzeughalter 20 mit seinem Werkzeughaltergehäuse 120 so auf die Stützflächen 70 und 80 aufsetzbar, daß dessen Stützbereiche 100 und 110 auf den entsprechenden Stützflächen 70 bzw. 80 vorzugsweise flächenhaft aufliegen, um eine stabile Abstützung des Werkzeughaltergehäuses 120 an der Werkzeugscheibe 22 zu erreichen.

Darüber hinaus ist das Werkzeughaltergehäuse 120 mit einem Festspannkörper 124 versehen, welcher vorzugsweise eine auf einer dem zweiten Stützbereich 110 gegenüberliegenden Seite des ersten Stützbereichs 100 an dem Werkzeughaltergehäuse 120 angeordnet ist, über den ersten Stützbereich 100 vom Werkzeughaltergehäuse 120 weg übersteht und dabei einen Kopf 126 aufweist, der eine sich konisch zum Werkzeughaltergehäuse 120 hin verjüngende Auflagefläche 128 aufweist.

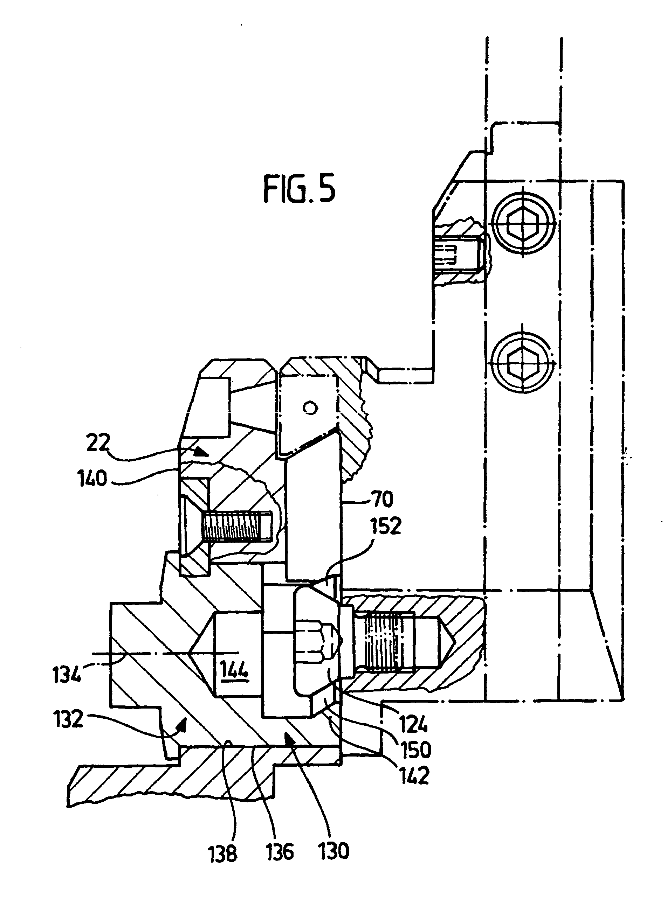

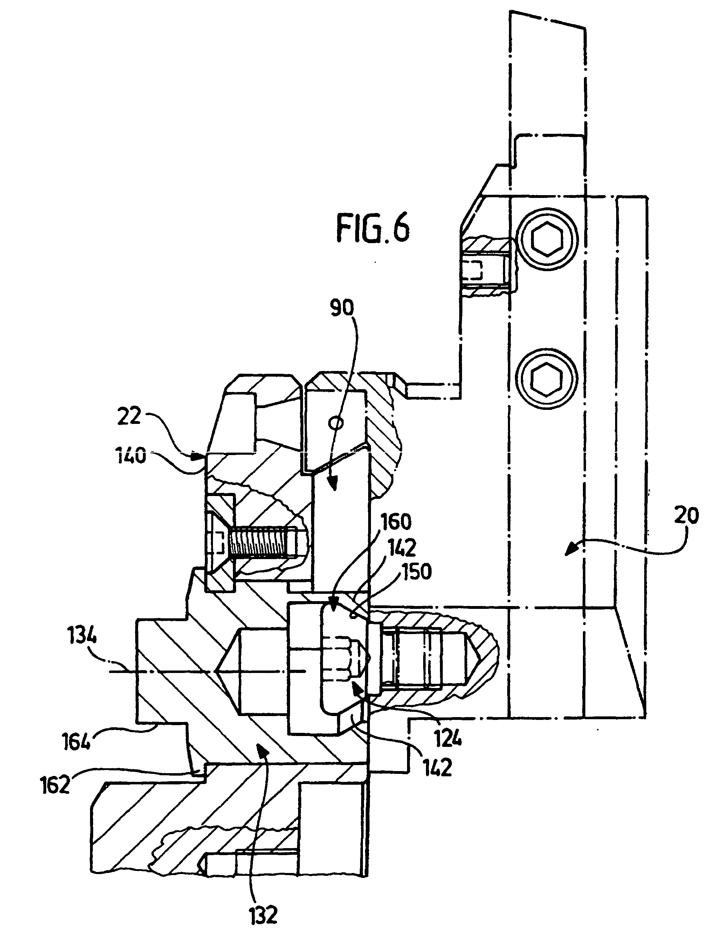

Der Festspannkörper 124 ist, wie in Fig. 1 und 2 sowie nochmals vergrößert in Fig. 5 und 6 dargestellt, in eine als Ganzes mit 130 bezeichnete Festspanneinrichtung einführbar, welche ein Festspannelement 132 umfaßt, das eine zu einer Drehachse 134 zylindrische äußere Mantelfläche 136 aufweist und mit dieser zylindrischen äußeren Mantelfläche 136 in einer Bohrung 138 sitzt, welche sich von einer Rückseite 140 der Werkzeugscheibe 22 durch diese hindurch bis zur ersten Stützfläche 70 erstreckt.

Das Festspannelement 132 weist ferner eine der Stützfläche 70 zugewandt angeordnete Spannkulisse 142 auf, welche um einen um die Drehachse 134 herum angeordneten Innenraum 144 im Festspannelement 132 herum verläuft und eine Keilfläche 150 aufweist, die sichelförmig um den Innenraum 144 herum verläuft und ausgehend von einem Anfangsbereich 152 der Spannkulisse 142 mit zunehmender Erstreckung in azimutaler Richtung um die Drehachse 134 herum einen zunehmend kleiner werdenden radialen Abstand aufweist, der an einem Endbereich 154 der Spannkulisse 142 minimal ist.

Ferner ist, wie insbesondere in Fig. 2 dargestellt, die Spannkulisse 142 zwischen dem Anfangsbereich 152 und dem Endbereich 154 derselben in azimutaler Richtung unterbrochen und bildet eine Einführöffnung 155 für den Festspannkörper 124, welche in einer Einsetzstellung des Festspannelements 132 dem Einführkanal 90 zugewandt ist und mit diesem fluchtet, wie bei der Spannkulisse 142₂ in Fig. 2 dargestellt, so daß der Festspannkörper 124 durch den Einführkanal 90 in den Innenbereich 144 des Festspannelements 132 längs eines radial zur Achse 14 verlaufenden Einsetzweges 156 (dargestellt im Zusammenhang mit der Spannkulisse 142₂ in Fig. 2) einführbar ist. Durch Verdrehen des Festspannelements 132 von der Einsetzstellung, in welcher die Einführöffnung 155 mit dem Einführkanal 90 fluchtet, in einer ersten Drehrichtung 158 kreuzt die Keilfläche 150, welche ebenfalls im gleichen Winkel wie die Anlagefläche 128 des Festspannkörpers 124 konisch zur Drehachse 134 verläuft, den Einsetzweg 156, kommt an dem Festspannkörper 124 zur Anlage und wirkt über die Auflagefläche 128 auf den Festspannkörper 124 in Richtung einer Spannrichtung 160, dargestellt in Fig. 6, ein, wobei die Spannkulisse 142 mit der Keilfläche 150 den Festspannkörper 124 einerseits in radialer Richtung zur Achse 14 verschiebt und andererseits noch zusätzlich in Richtung der Drehachse 134 in das Feststellelement 132 hineinzieht.

Um zu erreichen, daß das Festspannelement 132 in Richtung der Drehachse 134 auf den Festspannkörper 124 einwirken kann, stützt sich dieses noch mit einem äußeren Ringflansch 162 auf der Rückseite 140 der Werkzeugscheibe 22 ab.

Ferner ist das Feststellelement 132 mit über die Rückseite 140 der Werkzeugscheibe 22 überstehenden Schlüsselflächen 164 versehen, über welche mit einem entsprechenden Schlüssel auf das Festspannelement 132 zur Drehung desselben eingewirkt werden kann, um in Spannrichtung 160 auf den Festspannkörper 124 einzuwirken.

Wie in Fig. 2 im Zusammenhang mit der Spannkulisse 142₁ dargestellt, erfolgt ein Festspannen des jeweiligen Werkzeughalters mit einer Drehung des Festspannelements 132, welche vorzugsweise weniger als 270°, noch besser weniger als 180° beträgt.

Um ferner sicherzustellen, daß sich das Festspannelement 132 in seiner jeweils verdrehten und den Festspannkörper 124 beaufschlagenden Stellung nicht löst, ist vorzugsweise die Keilfläche 150 mit einer einem sich verkleinernden radialen Abstand von der Drehachse 134 bedingenden Steigung versehen, die in gerader Abwinklung einem Keilwinkel entspricht, der kleiner ist als ein Keilwinkel der Selbsthemmung.

Um ferner noch die Werkzeughalter 20 in der für diese vorgesehenen Position in azimutaler Richtung zur Achse 14, vorzugsweise einer Werkzeughalterstation, exakt positionieren zu können, ist jeder derartigen Werkzeughalterstation ein Ausrichtelement 172 zugeordnet, welches vorzugsweise eine kreiszylindrische Mantelfläche 174 aufweist.

Dieses Ausrichtelement 172 greift bei auf die Werkzeugscheibe 22 aufgesetztem Werkzeughaltergehäuse 120 in eine Ausnehmung 176 desselben ein, die zwischen den Teilbereichen 110a und 110b des zweiten Stützbereichs 110 angeordnet ist und sich radial zur Achse 14 nach außen erstreckt.

Die Ausnehmung 176 ist Teil einer Ausrichteinrichtung 180, welche eine auf einer Seite der Ausnehmung 176 liegende Stellschraube 182 aufweist, deren Längsachse 184 sich in ungefähr azimutaler Richtung erstreckt und die mit einer Stirnfläche 186 auf die Mantelfläche 174 des Ausrichtelements 172 wirkt. Der Stellschraube 182 gegenüberliegend ist ein mittels einer Druckfeder 188 beaufschlagter Körper 190, beispielsweise eine Kugel vorgesehen, die ebenfalls an der Mantelfläche 174 auf einer der Stirnfläche 186 gegenüberliegenden Seite des Ausrichtelements 172 anliegt.

Die federbeaufschlagte Kugel 190 stellt somit beim Aufsetzen der Merkzeughaltergehäuses 120 auf die Stützflächen 70 und 80 sicher, daß die Stirnfläche 186 stets kraftbeaufschlagt an der Mantelfläche 174 des Ausrichtelements 172 anliegt und somit durch die Einstellung der Stirnfläche 186 durch Drehen der Stellschraube 182 die azimutale Position des Werkzeughaltergehäuses 120 exakt festlegbar ist.

Vorzugsweise sitzt das Ausrichtelement 172 exakt symmetrisch zu einer Mittellinie 92 des Einführkanals 90, während der Festspannkörper 124 bei aufgesetztem Werkzeughalter mit seiner Mittelachse 129 geringfügig seitlich versetzt zur Mittellinie 92 und exzentrisch zur Drehachse 134 des Festspannelements 132, die die Mittellinie 92 schneidet, angeordnet ist und zwar zu der Seite, zu der sich der Anfang 152 der Keilfläche 150 beim Drehen des Festspannelements 132 zum Festspannen des Festspannkörpers 124 bewegt. Damit werden auf das Werkzeughaltergehäuse 120 wirkende Kippmomente verhindert, die zu einem ungleichmäßigen Anliegen der zweiten Stützbereiche an den zweiten Stützflächen führen könnten.

Das Einsetzen eines Werkzeughalters 20 erfolgt nun dergestalt, daß dieser zunächst an die Werkzeugscheibe 22 derart durch eine Bewegung parallel zur Achse 14 angesetzt wird, daß der Festspannkörper 124 in dem Einführkanal 90 liegend positioniert wird und zwar zwischen dem Ausrichtelement 172 und dem Festspannelement 132 mit der Spannkulisse 142. Dabei kommt der Stützbereich 100 des Werkzeughalterkörpers 120 ebenfalls an den Stützflächen 70a und 70b beiderseits des Einführkanals 90 zur Anlage. Durch Verschieben des Werkzeughalters 20 in einer Einführrichtung 176, angegeben in Fig. 2 im Zusammenhang mit der Spannkulisse 142₂, ist der Festspannkörper 124 längs des Einsetzweges 156, der parallel zur Mittellinie 92 des Einführkanals 90 verläuft, zu der Spannkulisse 142₂ hin bewegbar, welche in der Einsetzstellung mit der Einführöffnung 155 fluchtet, so daß der Festspannkörper 124 in eine von der Spannkulisse 142₂ Endposition in dem von der Spannkulisse 142 umgebenen Innenraum 144 bringbar ist.

Erfolgt in dieser Endposition ein Drehen der Spannkulisse 142₂ in der ersten Drehrichtung 158 so wirkt die Keilfläche 150 auf die Auflagefläche 128 des Festspannkörpers 124, wie bereits beschrieben, in der Spannrichtung 160.

Damit verläuft der Einsetzweg 156 des Festspannkörpers 124 einerseits in gerader Richtung und andererseits im wesentlichen exakt radial zur Achse 14 und parallel zu der Ebene 72, da vorzugsweise der Stützbereich 100 längs der Stützfläche 70 so lange gleitet, bis der Stützbereich 110 auf der Stützfläche 80 aufliegt.

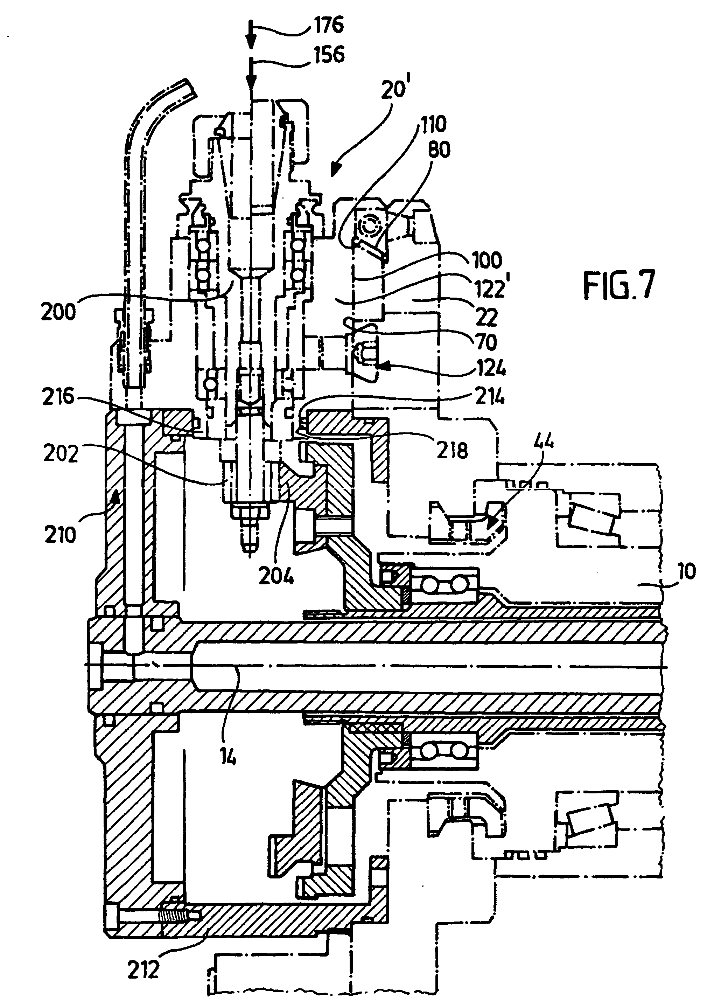

Besonders vorteilhaft ist ein derartiger Verlauf des Einsetzwegs 156 bei einer Variante des erfindungsgemäßen Werkzeugträgers, welche in Fig. 7 dargestellt ist.

Bei dieser sind die Werkzeughalter 20' als solche für rotierende Werkzeuge ausgebildet und weisen eine in dem Werkzeughaltergehäuse 122 drehbar gelagerte Werkzeugspindel 200 auf, welche über ein Zahnrad 202 antreibbar ist, das bei eingesetztem Werkzeughalter 20' auf einer der Achse 14 zugewandten Seite des Werkzeughaltergehäuses 122' übersteht und durch einen Kronenrad 204 antreibbar ist, welches um die Achse 14 drehbar gelagert und einen separaten Antrieb angetrieben ist.

Das Kronenrad 204 ist dabei vorzugsweise in einem Werkzeugträgergehäuse 210 angeordnet, welches einen zylindrisch um die Achse 14 umlaufenden Mantelkörper 212 aufweist, in welchem Durchbrüche 214 angeordnet sind, in welche das Werkzeughaltergehäuse 122 mit einem zylindrischen Ansatz 216 einsetzbar ist.

Ist der Durchbruch 214 exakt entsprechend der Außenkontur des zylindrischen Ansatzes 216 geformt, so ist es erforderlich, den Werkzeughalter 20' zumindest insoweit, als der zylindrische Ansatz in den Durchbruch 214 eingesetzt wird, geradlinig längs des Einsetzweges 156 in Einsetzrichtung 176 und im wesentlichen in radialer Richtung zur Achse 14 zu bewegen. Damit ist ein möglichst dichter Abschluß zwischen dem Durchbruch 214 und dem zylindrischen Ansatz 216 zu erhalten, welcher beispielsweise noch zusätzlich durch Dichtringe 218 abgedichtet werden kann.

## Patentansprüche

1. Werkzeuganordnung für Werkzeugmaschinen umfassend einen Werkzeughalter (20) und einen Werkzeugträger mit einer Grundeinheit (10), einem an der Grundeinheit (10) angeordneten Haltekörper (22), an welchem zwei in einem spitzen Winkel zueinander verlaufende Stützflächen (70, 80) zum Abstützen das Werkzeughalters (20) in einem ersten Stützbereich (100) und einem zweiten Stützbereich (110) angeordnet sind, und einer Festspanneinrichtung (130) zum Einwirken auf einen Festspannkörper (124) des Werkzeughalters (20) in einer derart verlaufenden Spannrichtung, daß der Werkzeughalter (20) mit dem ersten (100) und dem zweiten Stützbereich (110) die Stützflächen (70, 80) beaufschlagt,
**dadurch gekennzeichnet, daß**
ein Festspannelement (132) der Festspanneinrichtung (130) um eine Achse (134) drehbar im Haltekörper (22) gelagert ist und eine auf einer Bahn um die Achse (134) bewegbare Keilfläche (150) zum Einwirken auf den Festspannkörper (124) trägt, und daß die Keilfläche (150) des Festspannelements (132) ausgehend von einer Einsetzstellung beim Drehen des Festspannelements (132) in einer ersten Drehrichtung (158) den Festspannkörper (124) übergreift und diesen zunehmend in der Spannrichtung (160) verschiebend beaufschlagt.

2. Werkzeuganordnung nach Anspruch 1, **dadurch gekennzeichnet, daß** das Festspannelement (132) in einem die Stützflächen (70, 80) tragenden Bereich des Haltekörpers (22) angeordnet ist.

3. Werkzeuganordnung nach Anspruch 2, **dadurch gekennzeichnet, daß** das Festspannelement (132) auf einer dem Werkzeughalter (20) gegenüberliegenden Seite einer der Stützflächen (70) im Haltekörper (22) angeordnet ist.

4. Werkzeuganordnung nach einem der voranstehenden Ansprüche,
**dadurch gekennzeichnet, daß** das Festspannelement (132) um eine quer zu einer der Stützflächen (70) verlaufende Achse (134) drehbar ist.

5. Werkzeuganordnung nach einem der voranstehenden Ansprüche,
**dadurch gekennzeichnet, daß** das Festspannelement (132) in einer den Haltekörper (22) durchsetzenden Bohrung (138) drehbar gelagert ist.

6. Werkzeuganordnung nach einem der voranstehenden Ansprüche,
**dadurch gekennzeichnet, daß** das Festspannelement (132) derart bewegbar ist, daß die Keilfläche (150) den Einsetzweg (156) des Festspannkörpers (124) kreuzt.

7. Werkzeuganordnung nach einem der voranstehenden Ansprüche,
**dadurch gekennzeichnet, daß** die Keilfläche (150) in der Einsetzstellung des Festspannelements (132) außerhalb eines Einsetzwegs (156) des Festspannkörpers (124) angeordnet ist, weichen dieser beim Einsetzen des Werkzeughalters (20) in den Werkzeugträger beschreibt, und daß sich die Keilfläche (150) nach Drehung des Festspannelements (132) in der ersten Richtung (158) sich mit dem den Festspannkörper (124) beaufschlagenden Bereich quer zu diesem Einsatzweg (156) erstreckt.

8. Werkzeuganordnung nach einem der voranstehenden Ansprüche,
**dadurch gekennzeichnet, daß** das Festspannelement (132) so angeordnet ist, daß es in der Lage ist, auf den in einem gegenüber einer der Stützflächen (70) vertieft im Haltekörper (22) angeordneten Einführkanal (90) einführbaren Festspannkörper (124) zu wirken.

9. Werkzeuganordnung nach einem der voranstehenden Ansprüche, **dadurch gekennzeichnet, daß** der Haltekörper (22) einen geradlinigen Einsetzweg (156) zuläßt.

10. Werkzeuganordnung nach Anspruch 9, **dadurch gekennzeichnet, daß** der Einsetzweg (156) parallel zu einer der Stützflächen (70, 80) verläuft.

11. Werkzeuganordnung nach einem der voranstehenden Ansprüche, **dadurch gekennzeichnet, daß** das Festspannelement (132) zum Spannen des Werkzeughalters (20) um einen Winkel von weniger als 270° drehbar ist.

12. Werkzeuganordnung nach einem der voranstehenden Ansprüche, **dadurch gekennzeichnet, daß** das Festspannelement (132) eine die Keilfläche (150) tragende Spannkulisse (142) umfaßt.

13. Werkzeuganordnung nach Anspruch 12, **dadurch gekennzeichnet, daß** die Spannkulisse (142) sichelförmig gebogen ist.

14. Werkzeuganordnung nach Anspruch 12 oder 13, **dadurch gekennzeichnet, daß** das Festspannelement (132) eine vor einem Anfangsbereich (152) der Spann kulisse (142) liegende Ausnehmung (154) aufweist, durch welche der Festspannkörper (124) bei seiner Bewegung in Einsetzrichtung in den Wirkungsbereich der Spannkulisse (142) bringbar ist.

15. Werkzeuganordnung nach einem der Ansprüche 12 bis 14, **dadurch gekennzeichnet, daß** die Spannkulisse (142) die Keilfläche (150) auf einer der Achse des Festspannelements (132) zugewandten Seite trägt.

16. Werkzeuganordnung nach Anspruch 15, **dadurch gekennzeichnet, daß** das Festspannelement (132) einen Hohlzylinder umfaßt, welcher mit einem Wandabschnitt die Spannkulisse (142) bildet.

17. Werkzeuganordnung nach einem der voranstehenden Ansprüche, **dadurch gekennzeichnet, daß** die Stützflächen (70,80) und das Festspannelement (132) derart relativ zueinander angeordnet sind, daß der Werkzeughalter (20) durch eine Bewegung längs eines geradlinigen Einsetzwegs (156) mit dem ersten und zweiten Stützbereich (100, 110) an den entsprechenden Stützflächen (70, 80) anlegbar und mit dem Festspannkörper (124) in den Wirkungsbereich des Festspannelements (132) bringbar ist.

18. Werkzeuganordnung nach einem der voranstehenden Ansprüche, **dadurch gekennzeichnet, daß** eine Stützfläche (70, 80) des Haltekörpers (22) Teilflächen (70a, b; 80a, b) aufweist, die beiderseits eines sich in der Einführrichtung erstreckenden Einführkanals (90) für den Festspannkörper (124) liegen.

19. Werkzeuganordnung nach Anspruch 18, **dadurch gekennzeichnet, daß** beide Stützflächen (70, 80) geteilt sind und jede der Stützflächert (70, 80) beiderseits des Einführkanals (90) für den Festspannkörper (124) liegende Teilflächen (70a, b; 80a, b) aufweist.

20. Werkzeuganordnung nach einem der voranstehenden Ansprüche; **dadurch gekennzeichnet, daß** die Spannrichtung (160) parallel zu einer Richtung verläuft, die innerhalb des von den Stützflächen (70, 80) begrenzten Winkelbereichs (α) liegt.

21. Werkzeuganordnung nach einem der voranstehenden Ansprüche,
**dadurch gekennzeichnet, daß** der Haltekörper (22) kraftschlüssig mit der Grundeinheit (10) verbunden ist.

22. Werkzeuganordnung nach Anspruch 21, **dadurch gekennzeichnet, daß** die Grundeinheit (10) und der Haltekörper (22) durch Formschlußetemente (24, 30) retativ zueinander definiert ausrichtbar sind und daß die Formschlußelemente (24, 30) gegen eine Relativbewegung-zueinander kraftschlüssig fixiert sind.

23. Werkzeuganordnung nach Anspruch 21 oder 22, **dadurch gekennzeichnet, daß** die Grundeinheit (10) und der Haltekörper (22) durch an der Grundeinheit (10) und am Haltekörper (22) angreifende Spannpratzen (44) kraftschlüssig aneinander fixiert sind.

24. Werkzeuganordnung nach Anspruch 23, **dadurch gekennzeichnet, daß** im Bereich mindestens einer Angriffsstelle (36, 40) der Spannpratzen (44) eine Schrägfläche (42) vorgesehen ist, durch welche die Spannpratzen (44) eine den Kraftschluß bewirkende Kraft erzeugen.

25. Werkzeuganordnung nach einem der voranstehenden Ansprüche,
**dadurch gekennzeichnet, daß** der Grundeinheit (10) als Trägerwelle (12) und der Haltekörper als Werkzeugscheibe (22) eines Werkzeugrevolvers ausgebildet sind.

26. Werkzeuganordnung nach Anspruch 25, **dadurch gekennzeichnet, daß** die Trägerwelle (12) als Hohlwelle ausgebildet ist und daß die Spannpratzen (44) in radialer Richtung der Hohlwelle (12) wirksam sind, um die Werkzeugscheibe (22) und die Hohlwelle (12) in axialer Richtung zu verspannen.

27. Werkzeuganordnung nach einem der voranstehenden Ansprüche, **dadurch gekennzeichnet, daß** der Werkzeughalter (20) ein Werkzeughaltergehäuse (120) aufweist, welches einen ersten und einen zweiten Stützbereich (110) aufweist, die in einem spitzen Winkel zueinander verlaufen und an entsprechenden Stützflächen (70, 80) eines Haltekörpers (22) eines Werkzeugträgers anlegbar sind, und welches einen Festspannkörper (124) trägt, auf welchen eine Festspanneinrichtung (130) des Werkzeugträgers beim Festspannen des Werkzeughalters (20) einwirkt.

28. Werkzeuganordnung nach Anspruch 27, **dadurch gekennzeichnet, daß** der Haltekörper (22) mit einem Ausrichtelement (172) zum exakten Positionieren des Werkzeughalters (20) versehen ist und daß der Werkzeughalter (20) eine mit dem Ausrichtelement (172) in Eingriff bringbare Ausrichteinrichtung (180) aufweist.

29. Werkzeuganordnung nach Anspruch 27 oder 28, **dadurch gekennzeichnet, daß** der Festspannkörper (124) über einen der Stützbereiche (100) vom Werkzeughaltergehäuse (120) weg übersteht.

30. Werkzeuganordnung nach einem der Ansprüche 27 bis 29, **dadurch gekennzeichnet, daß** der Festspannkörper (124) einen Kopf (126) mit einer sich konisch zum Werkzeughattergehäuse (120) hin verjüngenden Auflagefläche (128) aufweist.

31. Werkzeuganordnung nach einem der Ansprüche 27 bis 30, **dadurch gekennzeichnet, daß** ein erster der Stützbereiche (100) durch eine Planfläche des Werkzeughaltergehäuses (120) gebildet ist.

32. Werkzeuganordnung nach einem der Ansprüche 27 bis 31, **dadurch gekennzeichnet, daß** der zweite Stützbereich (110) durch eine an einer Nase (122) des Werkzeughaltergehäuses (120) angeordnete Fläche gebildet ist.

33. Werkzeuganordnung nach Anspruch 32, **dadurch gekennzeichnet, daß** der zweite Stützbereich (110) in zwei Teilbereiche geteilt ist.

34. Werkzeuganordnung nach einem der Ansprüche 27 bis 33, **dadurch gekennzeichnet, daß** dieser mit einer Ausrichteinrichtung (180) versehen ist, welcher mit einem Ausrichtelement (172) am Werkzeugträger in Wechselwirkung bringbar ist.

35. Werkzeuganordnung nach Anspruch 34, **dadurch gekennzeichnet, daß** die Ausrichteinrichtung (180) ein voreinstellbares Stellelement (182) umfaßt.

36. Werkzeugträger für Werkzeugmaschinen umfassend eine Grundeinheit (10), einen an der Grundeinheit (10) angeordneten Haltekörper (22), an welchem zwei in einem spitzen Winkel zueinander verlaufende Stützflächen (70, 80) zum Abstützen eines Werkzeughalters (20) angeordnet sind, und eine Festspanneinrichtung (130) zum Einwirken auf den Werkzeughalter (20) in einer Spannrichtung,
**dadurch gekennzeichnet, daß**
ein Festspannelement (132) der Festspanneinrichtung (130) um eine Achse (134) drehbar im Haltekörper (22) gelagert ist und eine auf einer Bahn um die Achse (134) bewegbare Keilfläche (150) trägt, und daß die Keilfläche (150) des Festspannelements (132) durch eine sichelförmig gebogene Spannkulisse (142) gebildet ist.

37. Werkzeugträger nach Anspruch 36, **dadurch gekennzeichnet, daß** das Festspannelement (132) in einem die Stützflächen (70, 80) tragenden Bereich des Haltekörpers (22) angeordnet ist.

38. Werkzeugträger nach Anspruch 37, **dadurch gekennzeichnet, daß** das Festspannelement (132) auf einer dem Werkzeughalter (20) gegenüberliegenden Seite einer der Stützflächen (70) im Haltekörper (22) angeordnet ist.

39. Werkzeugträger nach einem der Ansprüche 36 bis 38, **dadurch gekennzeichnet, daß** das Festspannelement (132) um eine quer zu einer der Stützflächen (70) verlaufende Achse, (134) drehbar ist.

40. Werkzeugträger nach einem der Ansprüche 36 bis 39, **dadurch gekennzeichnet, daß** das Festspannelement (132) in einer den Haltekörper (22) durchsetzenden Bohrung (138) drehbar gelagert ist.

41. Werkzeugträger nach einem der Ansprüche 36 bis 40, **dadurch gekennzeichnet, daß** das Festspannelement (132) derart bewegbar ist, daß die Keilfläche (150) einen Einsetzweg (156) für einen Festspannkörper (124) kreuzt.

42. Werkzeugträger nach einem der Ansprüche 36 bis 41, **dadurch gekennzeichnet, daß** die Keilfläche (150) in der Einsetzstellung des Festspannelements (132) außerhalb eines Einsetzwegs (156) angeordnet ist, und daß sich die Keilfläche (150) nach Drehung des Festspannelements (132) in der ersten Richtung (158) sich mit einem Bereich quer zu diesem Einsatzweg (156) erstreckt.

43. Werkzeugträger nach Anspruch 41 oder 42, **dadurch gekennzeichnet, daß** der Haltekörper (22) einen geradlinigen Einsetzweg (156) zuläßt.

44. Werkzeugträger nach Anspruch 43, **dadurch gekennzeichnet, daß** der Einsetzweg (156) parallel zu einer der Stützflächen (70, 80) verläuft.

45. Werkzeugträger nach einem der Ansprüche 36 bis 44, **dadurch gekennzeichnet, daß** das Festspannelement (132) zum Spannen des Werkzeughalters (20) um einen Winkel von weniger als 270° drehbar ist.

46. Werkzeugträger nach einem der Ansprüche 36 bis 45, **dadurch gekennzeichnet, daß** das Festspannelement (132) eine vor einem Anfangsbereich (152) der Spannkulisse (142) liegende Ausnehmung (154) aufweist.

47. Werkzeugträger nach einem der Ansprüche 36 bis 46, **dadurch gekennzeichnet, daß** die Spannkulisse (142) die Keilfläche (150) auf einer der Achse des Festspannelements (132) zugewandten Seite trägt.

48. Werkzeugträger nach Anspruch 47, **dadurch gekennzeichnet, daß** das Festspannelement (132) einen Hohlzylinder umfaßt, welcher mit einem Wandabschnitt die Spannkulisse (142) bildet.

49. Werkzeugträger nach einem der Ansprüche 36 bis 48, **dadurch gekennzeichnet, daß** eine Stützfläche (70, 80) des Haltekörpers (22) Teilflächen (70a, b; 80a, b) aufweist, die beiderseits eines sich in der Einführrichtung erstreckenden Einführkanals (90) für einen Festspannkörper (124) liegen.

50. Werkzeugträger nach Anspruch 49, **dadurch gekennzeichnet, daß** beide Stützflächen (70, 80) geteilt sind und jede der Stützflächen (70, 80) beiderseits des Einführkanals (90) liegende Teilflächen (70a, b; 80a, b) aufweist.

51. Werkzeugträger nach einem der Ansprüche 36 bis 50, **dadurch gekennzeichnet, daß** die Spannrichtung (160) parallel zu einer Richtung verläuft, die innerhalb des von den Stützflächen (70, 80) begrenzten Winkelbereichs (α) liegt.

52. Werkzeugträger nach einem der Ansprüche 36 bis 51, **dadurch gekennzeichnet, daß** der Haltekörper (22) kraftschlüssig mit der Grundeinheit (10) verbunden ist.

53. Werkzeugträger nach Anspruch 52, **dadurch gekennzeichnet, daß** die Grundeinheit (10) und der Haltekörper (22) durch Formschlußelemente (24, 30) relativ zueinander definiert ausrichtbar sind und daß die Formschlußelemente (24, 30) gegen eine Relativbewegung zueinander kraftschlüssig fixiert sind.

54. Werkzeugträger nach Anspruch 52 oder 53, **dadurch gekennzeichnet, daß** die Grundeinheit (10) und der Haltekörper (22) durch an der Grundeinheit (10) und am Haltekörper (22) angreifende Spannpratzen (44) kraftschlüssig aneinander fixiert sind.

55. Werkzeugträger nach Anspruch 54, **dadurch gekennzeichnet, daß** im Bereich mindestens einer Angriffsstelle (36, 40) der Spannpratzen (44) eine Schrägfläche (42) vorgesehen ist, durch welche die Spannpratzen (44) eine den Kraftschluß bewirkende Kraft erzeugen.

56. Werkzeugträger nach einem der Ansprüche 36 bis 55, **dadurch gekennzeichnet, daß** der Grundeinheit (10) als Trägerwelle (12) und der Haltekörper als Werkzeugscheibe (22) eines Werkzeugrevolvers ausgebildet sind.

57. Werkzeugträger nach Anspruch 56, **dadurch gekennzeichnet, daß** die Trägerwelle (12) als Hohlwelle ausgebildet ist und daß die Spannpratzen (44) in radialer Richtung der Hohlwelle (12) wirksam sind, um die Werkzeugscheibe (22) und die Hohlwelle (12) in axialer Richtung zu verspannen.

## Claims

1. Tool system for machine tools comprising a tool holder (20) and a tool carrier with a base unit (10), a holding member (22) arranged on the base unit (10), two supporting surfaces (70, 80) extending at an acute angle relative to one another being arranged on said holding member for supporting the tool holder (20) in a first supporting area (100) and a second supporting area (110), and a clamping device (130) for acting on a clamping member (124) of the tool holder (20) in a clamping direction extending in such a manner that the tool holder (20) acts upon the supporting surfaces (70, 80) with the first supporting area (100) and the second supporting area (110),
**characterized in that** a clamping element (132) of the clamping device (130) is mounted in the holding member (22) for rotation about an axis (134) and bears a wedge surface (150) movable on a path around the axis (134) for acting on the clamping member (124), and that the wedge surface (150) of the clamping element (132) engages over the clamping member (124) during the rotation of the clamping element (132) in a first direction of rotation (158) proceeding from an insert position and acts upon said clamping member so as to displace it increasingly in the clamping direction (160).

2. Tool system as defined in claim 1, **characterized in that** the clamping element (132) is arranged in an area of the holding member (22) bearing the supporting surfaces (70, 80).

3. Tool system as defined in claim 2, **characterized in that** the clamping element (132) is arranged in the holding member (22) on a side of one of the supporting surfaces (70) located opposite the tool holder (20).

4. Tool system as defined in any one of the preceding claims,
**characterized in that** the clamping element (132) is rotatable about an axis (134) extending transversely to one of the supporting surfaces (70).

5. Tool system as defined in any one of the preceding claims,
**characterized in that** the clamping element (132) is mounted for rotation in a bore (138) passing through the holding member (22).

6. Tool system as defined in any one of the preceding claims,
**characterized in that** the clamping element (132) is movable in such a manner that the wedge surface (150) crosses the insert path (156) of the clamping member (124).

7. Tool system as defined in any one of the preceding claims,
**characterized in that** in the insert position of the clamping element (132) the wedge surface (150) is arranged outside an insert path (156) of the clamping member (124) described by said clamping member during the insertion of the tool holder (20) into the tool carrier, and that the wedge surface (150) extends transversely to this insert path (156) with the area acting upon the clamping member (124) following rotation of the clamping element (132) in the first direction (158).

8. Tool system as defined in any one of the preceding claims,
**characterized in that** the clamping element (132) is arranged such that it is in a position to act on the clamping member (124) introducible in an entry channel (90) arranged in the holding member (22), said entry channel being recessed in relation to one of the supporting surfaces (70).

9. Tool system as defined in any one of the preceding claims,
**characterized in that** the holding member (22) allows a straight insert path (156).

10. Tool system as defined in claim 9, **characterized in that** the insert path (156) extends parallel to one of the supporting surfaces (70, 80).

11. Tool system as defined in any one of the preceding claims,
**characterized in that** the clamping element (132) is rotatable through an angle of less than 270° for the clamping of the tool holder (20).

12. Tool system as defined in any one of the preceding claims,
**characterized in that** the clamping element (132) comprises a clamping link member (142) bearing the wedge surface (150).

13. Tool system as defined in claim 12, **characterized in that** the clamping link member (142) is bent in the shape of a sickle.

14. Tool system as defined in claim 12 or 13, **characterized in that** the clamping element (132) has a recess (154) located in front of an initial area (152) of the clamping link member (142), the clamping member (124) being adapted to be brought through said recess into the operative area of the clamping link member (142) during its movement in insert direction.

15. Tool system as defined in any one of claims 12 to 14, **characterized in that** the clamping link member (142) bears the wedge surface (150) on a side facing the axis of the clamping element (132).

16. Tool system as defined in claim 15, **characterized in that** the clamping element (132) comprises a hollow cylinder forming the clamping link member (142) with a wall section.

17. Tool system as defined in any one of the preceding claims,
**characterized in that** the supporting surfaces (70, 80) and the clamping element (132) are arranged relative to one another in such a manner that the tool holder (20) is adapted to abut with the first and second supporting areas (100, 110) on the corresponding supporting surfaces (70, 80) due to movement along a straight insert path (156) and to be brought into the operative area of the clamping element (132) with the clamping member (124).

18. Tool system as defined in any one of the preceding claims,
**characterized in that** one supporting surface (70, 80) of the holding member (22) has partial surfaces (70a, b; 80a, b) located on both sides of an entry channel (90) for the clamping member (124) extending in the entry direction.

19. Tool system as defined in claim 18, **characterized in that** both supporting surfaces (70, 80) are divided and each of the supporting surfaces (70, 80) has partial surfaces (70a, b; 80a, b) located on both sides of the entry channel (90) for the clamping member (124).

20. Tool system as defined in any one of the preceding claims,
**characterized in that** the clamping direction (160) extends parallel to a direction located within the angular area (α) limited by the supporting surfaces (70, 80).

21. Tool system as defined in any one of the preceding claims,
**characterized in that** the holding member (22) is connected to the base unit (10) in a force-locking manner.

22. Tool system as defined in claim 21, **characterized in that** the base unit (10) and the holding member (22) are alignable relative to one another in a defined manner by means of form-locking elements (24, 30) and that the form-locking elements (24, 30) are fixed in a force-locking manner against any relative movement in relation to one another.

23. Tool system as defined in claim 21 or 22, **characterized in that** the base unit (10) and the holding member (22) are fixed to one another in a force-locking manner by means of clamping claws (44) engaging on the base unit (10) and on the holding member (22).

24. Tool system as defined in claim 23, **characterized in that** an inclined surface (42) is provided in the area of at least one point of engagement (36, 40) of the clamping claws (44), the clamping claws (44) generating a force effecting the force locking by means of said inclined surface.

25. Tool system as defined in any one of the preceding claims,
**characterized in that** the base unit (10) is designed as a support shaft (12) and the holding member as a tool disk (22) of a tool turret.

26. Tool system as defined in claim 25, **characterized in that** the support shaft (12) is designed as a hollow shaft and that the clamping claws (44) are operative in a radial direction of the hollow shaft (12) in order to clamp the tool disk (22) and the hollow shaft (12) in an axial direction.

27. Tool system as defined in any one of the preceding claims,
**characterized in that** the tool holder (22) has a tool holder housing (120) with a first and a second supporting area (110) extending at an acute angle to one another and being adapted to abut on corresponding supporting surfaces (70, 80) of a holding member (22) of a tool carrier, said tool holder housing bearing a clamping member (124), a clamping device (130) of the tool carrier acting on said clamping member during clamping of the tool holder (22).

28. Tool system as defined in claim 27, **characterized in that** the holding member (22) is provided with an aligning element (172) for the exact positioning of the tool holder (20) and that the tool holder (20) has an aligning device (180) adapted to be brought into engagement with the aligning element (172).

29. Tool system as defined in claim 27 or 28, **characterized in that** the clamping member (124) projects away from the tool holder housing (120) over one of the supporting areas (100).

30. Tool system as defined in any one of claims 27 to 29, **characterized in that** the clamping member (124) has a head (126) with a contact surface (128) tapering conically towards the tool holder housing (120).

31. Tool system as defined in any one of claims 27 to 30, **characterized in that** a first one of the supporting areas (100) is formed by a plane surface of the tool holder housing (120).

32. Tool system as defined in any one of claims 27 to 31, **characterized in that** the second supporting area (110) is formed by a surface arranged on a nose (122) of the tool holder housing (120).

33. Tool system as defined in claim 32, **characterized in that** the second supporting area (100) is divided into two sections.

34. Tool system as defined in any one of claims 27 to 33, **characterized in that** this is provided with an aligning device (180) adapted to be brought into interaction with an aligning element (172) on the tool carrier.

35. Tool system as defined in claim 34, **characterized in that** the aligning device (180) comprises a preadjustable adjusting element (182).

36. Tool carrier for machine tools comprising a base unit (10), a holding member (22) arranged on the base unit, two supporting surfaces (70, 80) extending at an acute angle to one another being arranged on said holding member for supporting a tool holder (20), and a clamping device (130) for acting on the tool holder (20) in a clamping direction,
**characterized in that** a clamping element (132) of the clamping device (130) is mounted in the holding member (22) for rotation about an axis (134) and bears a wedge surface (150) movable on a path around the axis (134) and that the wedge surface (150) of the clamping element (132) is formed by a clamping link member (142) bent in the shape of a sickle.

37. Tool carrier as defined in claim 36, **characterized in that** the clamping element (132) is arranged in an area of the holding member (22) bearing the supporting surfaces (70, 80).

38. Tool carrier as defined in claim 37, **characterized in that** the clamping element (132) is arranged in the holding member (22) on a side of one of the supporting surfaces (70) located opposite the tool holder (20).

39. Tool carrier as defined in any one of claims 36 to 38, **characterized in that** the clamping element (132) is rotatable about an axis (134) extending transversely to one of the supporting surfaces (70).

40. Tool carrier as defined in any one of claims 36 to 39, **characterized in that** the clamping element (132) is mounted for rotation in a bore (138) passing through the holding member (22).

41. Tool carrier as defined in any one of claims 36 to 40, **characterized in that** the clamping element (132) is movable in such a manner that the wedge surface (150) crosses an insert path (156) for a clamping member (124).

42. Tool carrier as defined in any one of claims 36 to 41, **characterized in that** in the insert position of the clamping element (132) the wedge surface (150) is arranged outside an insert path (156) and that the wedge surface (150) extends with an area transversely to this insert path (156) following rotation of the clamping element (132) in the first direction (158).

43. Tool carrier as defined in claim 41 or 42, **characterized in that** the holding member (22) allows a straight insert path (156).

44. Tool carrier as defined in claim 43, **characterized in that** the insert path (156) extends parallel to one of the supporting surfaces (70, 80).

45. Tool carrier as defined in any one of claims 36 to 44, **characterized in that** the clamping element (132) is rotatable through an angle of less than 270° for the clamping of the tool holder (20).

46. Tool carrier as defined in any one of claims 36 to 45, **characterized in that** the clamping element (132) has a recess (154) located in front of an initial area (152) of the clamping link member (142).

47. Tool carrier as defined in any one of claims 36 to 46, **characterized in that** the clamping link member (142) bears the wedge surface (150) on a side facing the axis of the clamping element (132).

48. Tool carrier as defined in claim 47, **characterized in that** the clamping element (132) comprises a hollow cylinder forming the clamping link member (142) with a wall section.

49. Tool carrier as defined in any one of claims 36 to 48, **characterized in that** one supporting surface (70, 80) of the holding member (22) has partial surfaces (70a, b; 80a, b) located on both sides of an entry channel (90) for a clamping member (124) extending in the entry direction.

50. Tool carrier as defined in claim 49, **characterized in that** both supporting surfaces (70, 80) are divided and each of the supporting surfaces (70, 80) has partial surfaces (70a, b; 80a, b) located on both sides of the entry channel (90).

51. Tool carrier as defined in any one of claims 36 to 50, **characterized in that** the clamping direction (160) extends parallel to a direction located within the angular area (α) limited by the supporting surfaces (70, 80).

52. Tool carrier as defined in any one of claims 36 to 51, **characterized in that** the holding member (22) is connected to the base unit (10) in a force-locking manner.

53. Tool carrier as defined in claim 52, **characterized in that** the base unit (10) and the holding member (22) are alignable relative to one another in a defined manner by means of form-locking elements (24, 30) and that the form-locking elements (24, 30) are fixed in a force-locking manner against any relative movement in relation to one another.

54. Tool carrier as defined in claim 52 or 53, **characterized in that** the base unit (10) and the holding member (22) are fixed to one another in a force-locking manner by means of clamping claws (44) engaging on the base unit (10) and on the holding member (22).

55. Tool carrier as defined in claim 54, **characterized in that** an inclined surface (42) is provided in the area of at least one point of engagement (36, 40) of the clamping claws (44), the clamping claws (44) generating a force effecting the force locking by means of said inclined surface.

56. Tool carrier as defined in any one of claims 36 to 55, **characterized in that** the base unit (10) is designed as a support shaft (12) and the holding member as a tool disk (22) of a tool turret.

57. Tool carrier as defined in claim 56, **characterized in that** the support shaft (12) is designed as a hollow shaft and that the clamping claws (44) are operative in a radial direction of the hollow shaft (12) in order to clamp the tool disk (22) and the hollow shaft (12) in an axial direction.

## Revendications

1. Agencement d'outil pour machines-outils comprenant un porte-outil (20) et un support d'outil présentant une unité de base (10), un corps de retenue (22) disposé sur l'unité de base (10), sur lequel sont disposées deux surfaces de support (70, 80) s'étendant l'une par rapport à l'autre en formant un angle aigu, afin de supporter le porte-outil (20) dans une première zone de support (100) et une seconde zone de support (110), et un dispositif de serrage (130) destiné à agir sur un corps de serrage (124) du porte-outil (20) dans une direction de serrage s'étendant de telle sorte que le porte-outil (20) sollicite les surfaces de support (70, 80) avec les première (100) et seconde zone de support (110), **caractérisé en ce qu'**un élément de serrage (132) du dispositif de serrage (130) est logé dans le corps de retenue (22) de manière à pouvoir tourner autour d'un axe (134) et porte une surface cunéiforme (150) mobile sur une bande autour de l'axe (134), afin d'agir sur le corps de serrage (124), et **en ce que** la surface cunéiforme (150) de l'élément de serrage (132) en partant d'une position de chargement lors de la rotation de l'élément de serrage (132) dans une première direction de rotation (158) chevauche le corps de serrage (124) et sollicite celui-ci progressivement de manière coulissante dans la direction de serrage (160).

2. Agencement d'outil selon la revendication 1, **caractérisé en ce que** l'élément de serrage (132) est disposé dans une zone du corps de retenue (22) portant les surfaces de support (70, 80).

3. Agencement d'outil selon la revendication 2, **caractérisé en ce que** l'élément de serrage (132) est disposé dans le corps de retenue (22) sur un côté d'une des surfaces de support (70) opposé au porte-outil (20).

4. Agencement d'outil selon l'une des revendications précédentes, **caractérisé en ce que** l'élément de serrage (132) peut tourner autour d'un axe (134) s'étendant transversalement à l'une des surfaces de support (70).

5. Agencement d'outil selon l'une des revendications précédentes, **caractérisé en ce que** l'élément de serrage (132) est logé de manière rotative dans un alésage (138) traversant le corps de retenue (22).

6. Agencement d'outil selon l'une des revendications précédentes, **caractérisé en ce que** l'élément de serrage (132) est mobile de telle sorte que la surface cunéiforme (150) croise le trajet de chargement (156) du corps de serrage (124).

7. Agencement d'outil selon l'une des revendications précédentes, **caractérisé en ce que** la surface cunéiforme (150) dans la position de chargement de l'élément de serrage (132) est disposée à l'extérieur d'un trajet de chargement (156) du corps de serrage (124), trajet que ledit corps décrit lors du chargement du porte-outil (20) dans le support d'outil, et **en ce que** la surface cunéiforme (150), après la rotation de l'élément de serrage (132) dans la première direction (158), s'étend avec la zone sollicitant le corps de serrage (124) transversalement à ce trajet de chargement (156).

8. Agencement d'outil selon l'une des revendications précédentes, **caractérisé en ce que** l'élément de serrage (132) est disposé de telle sorte qu'il se trouve en position d'agir sur le corps de serrage (124) pouvant être introduit dans un canal d'introduction (90) disposé profondément dans le corps de retenue (22) à l'opposé d'une des surfaces de support (70).

9. Agencement d'outil selon l'une des revendications précédentes, **caractérisé en ce que** le corps de retenue (22) autorise un trajet de chargement (156) rectiligne.

10. Agencement d'outil selon la revendication 9, **caractérisé en ce que** le trajet de chargement (156) s'étend parallèlement à l'une des surfaces de support (70, 80).

11. Agencement d'outil selon l'une des revendications précédentes, **caractérisé en ce que** l'élément de serrage (132) peut tourner autour d'un angle de moins de 270° afin de serrer le porte-outil (20).

12. Agencement d'outil selon l'une des revendications précédentes, **caractérisé en ce que** l'élément de serrage (132) comprend une coulisse de serrage (142) portant la surface cunéiforme (150).

13. Agencement d'outil selon la revendication 12, **caractérisé en ce que** la coulisse de serrage (142) est pliée de manière falciforme.

14. Agencement d'outil selon la revendication 12 ou 13, **caractérisé en ce que** l'élément de serrage (132) comprend un évidement (154) situé devant une zone de départ (152) de la coulisse de serrage (142), évidement par l'intermédiaire duquel le corps de serrage (124) peut être amené lors de son déplacement dans la direction de chargement dans la zone d'action de la coulisse de serrage (142).

15. Agencement d'outil selon l'une des revendications 12 à 14, **caractérisé en ce que** la coulisse de serrage (142) porte la surface cunéiforme (150) sur un côté tourné vers l'axe de l'élément de serrage (132).

16. Agencement d'outil selon la revendication 15, **caractérisé en ce que** l'élément de serrage (132) comprend un cylindre creux, lequel forme avec une section de paroi la coulisse de serrage (142).

17. Agencement d'outil selon l'une des revendications précédentes, **caractérisé en ce que** les surfaces de support (70, 80) et l'élément de serrage (132) sont disposés l'un par rapport à l'autre de telle sorte que le porte-outil (20) puisse s'appuyer par l'intermédiaire d'un déplacement le long d'un trajet de chargement (156) rectiligne avec les première et seconde zones de support (100, 110) sur les surfaces de support (70, 80) correspondantes et puisse être amené avec le corps de serrage (124) dans la zone d'action de l'élément de serrage (132).

18. Agencement d'outil selon l'une des revendications précédentes, **caractérisé en ce qu'**une surface de support (70, 80) du corps de retenue (22) comprend des surfaces partielles (70a, b ; 80a, b), qui se situent des deux côtés d'un canal d'introduction (90) s'étendant dans la direction d'introduction pour le corps de serrage (124).

19. Agencement d'outil selon la revendication 18, **caractérisé en ce que** les deux surfaces de support (70, 80) sont séparées et chacune des surfaces de support (70, 80) comprend des surfaces partielles (70a, b ; 80a, b) situées des deux côtés du canal d'introduction (90) pour le corps de serrage (124).

20. Agencement d'outil selon l'une des revendications précédentes, **caractérisé en ce que** la direction de serrage (160) s'étend parallèlement à une direction qui se situe à l'intérieur de la zone angulaire (α) délimitée par les surfaces de support (70, 80).

21. Agencement d'outil selon l'une des revendications précédentes, **caractérisé en ce que** le corps de retenue (22) est relié par adhérence à l'unité de base (10).

22. Agencement d'outil selon la revendication 21, **caractérisé en ce que** l'unité de base (10) et le corps de retenue (22) peuvent être orientés de manière définie l'un par rapport à l'autre par l'intermédiaire d'éléments de conjugaison de forme (24, 30) et **en ce que** les éléments de conjugaison de forme (24, 30) sont fixés par adhérence l'un par rapport à l'autre à l'encontre d'un déplacement relatif.

23. Agencement d'outil selon la revendication 21 ou 22, **caractérisé en ce que** l'unité de base (10) et le corps de retenue (22) sont fixés l'un sur l'autre par adhérence par l'intermédiaire de griffes de serrage (44) s'appliquant sur l'unité de base (10) et sur le corps de retenue (22).

24. Agencement d'outil selon la revendication 23, **caractérisé en ce qu'**il est prévu dans la zone d'au moins un point d'attaque (36, 40) des griffes de serrage (44) une surface oblique (42), par l'intermédiaire de laquelle les griffes de serrage (44) créent une force réalisant l'adhérence.

25. Agencement d'outil selon l'une des revendications précédentes, **caractérisé en ce que** l'unité de base (10) est réalisée comme un arbre de support (12) et le corps de retenue comme un plateau d'outil (22) d'une tourelle d'outil.

26. Agencement d'outil selon la revendication 25, **caractérisé en ce que** l'arbre de support (12) est réalisé comme un arbre creux et **en ce que** les griffes de serrage (44) agissent dans la direction radiale de l'arbre creux (12), afin de serrer le plateau d'outil (22) et l'arbre creux (12) dans la direction axiale.

27. Agencement d'outil selon l'une des revendications précédentes, **caractérisé en ce que** le porte-outil (20) comprend un boîtier de porte-outil (120), lequel comprend une première et une seconde zones de support (110), qui s'étendent l'une par rapport à l'autre en formant un angle aigu et peuvent s'appuyer sur des surfaces de support (70, 80) correspondantes d'un corps de retenue (22) d'un support d'outil, et lequel porte un corps de serrage (124), sur lequel agit un dispositif de serrage (130) du support d'outil lors du serrage du porte-outil (20).

28. Agencement d'outil selon la revendication 27, **caractérisé en ce que** le corps de retenue (22) est doté d'un élément d'orientation (172) en vue du positionnement exact du porte-outil (20) et **en ce que** le porte-outil (20) comprend un dispositif d'orientation (180) pouvant être amené en prise avec l'élément d'orientation (172).

29. Agencement d'outil selon la revendication 27 ou 28, **caractérisé en ce que** le corps de serrage (124) dépasse d'une des zones de support (100) à l'écart du boîtier de porte-outil (120).

30. Agencement d'outil selon l'une des revendications 27 à 29, **caractérisé en ce que** le corps de serrage (124) comprend une tête (126) présentant une surface d'appui (128) se rétrécissant de manière conique en direction du boîtier de porte-outil (120).

31. Agencement d'outil selon l'une des revendications 27 à 30, **caractérisé en ce qu'**une première des zones de support (100) est formée par une surface transversale du boîtier de porte-outil (120).

32. Agencement d'outil selon l'une des revendications 27 à 31, **caractérisé en ce que** la seconde zone de support (110) est formée par une surface disposée sur un bec (122) du boîtier de porte-outil (120).

33. Agencement d'outil selon la revendication 32, **caractérisé en ce que** la seconde zone de support (110) est séparée en deux zones partielles.

34. Agencement d'outil selon l'une des revendications 27 à 33, **caractérisé en ce que** celui-ci est doté d'un dispositif d'orientation (180), lequel peut être amené en interaction sur le support d'outil avec un élément d'orientation (172).

35. Agencement d'outil selon la revendication 34, **caractérisé en ce que** le dispositif d'orientation (180) comprend un élément de réglage (182) préréglable.

36. Support d'outil pour machines-outils comprenant une unité de base (10), un corps de retenue (22) disposé sur l'unité de base (10), corps sur lequel sont disposées deux surfaces de support (70, 80) s'étendant l'une par rapport à l'autre en formant un angle aigu afin de supporter un porte-outil (20), et un dispositif de serrage (130) destiné à agir sur le porte-outil (20) dans une direction de serrage, **caractérisé en ce qu'**un élément de serrage (132) du dispositif de serrage (130) est logé dans le corps de retenue (22) de manière à pouvoir tourner autour d'un axe (134) et porte une surface cunéiforme (150) mobile sur une bande autour de l'axe (134), et **en ce que** la surface cunéiforme (150) de l'élément de serrage (132) est formée par une coulisse de serrage (142) pliée de manière falciforme.

37. Support d'outil selon la revendication 36, **caractérisé en ce que** l'élément de serrage (132) est disposé dans une zone du corps de retenue (22) portant les surfaces de support (70, 80).

38. Support d'outil selon la revendication 37, **caractérisé en ce que** l'élément de serrage (132) est disposé dans le corps de retenue (22) sur un côté d'une des surfaces de support (70) opposé au porte-outil (20).

39. Support d'outil selon l'une des revendications 36 à 38, **caractérisé en ce que** l'élément de serrage (132) peut tourner autour d'un axe (134) s'étendant transversalement à l'une des surfaces de support (70).

40. Support d'outil selon l'une des revendications 36 à 39, **caractérisé en ce que** l'élément de serrage (132) est logé de manière rotative dans un alésage (138) traversant le corps de retenue (22).

41. Support d'outil selon l'une des revendications 36 à 40, **caractérisé en ce que** l'élément de serrage (132) est mobile de telle sorte que la surface cunéiforme (150) croise un trajet de chargement (156) pour un corps de serrage (124).

42. Support d'outil selon l'une des revendications 36 à 41, **caractérisé en ce que** la surface cunéiforme (150) est disposée dans la position de chargement de l'élément de serrage (132) à l'extérieur d'un trajet de chargement (156), et **en ce que** la surface cunéiforme (150), après la rotation de l'élément de serrage (132) dans la première direction (158), s'étend avec une zone transversalement à ce trajet de chargement (156).

43. Support d'outil selon la revendication 41 ou 42, **caractérisé en ce que** le corps de retenue (22) autorise un trajet de chargement (156) rectiligne.

44. Support d'outil selon la revendication 43, **caractérisé en ce que** le trajet de chargement (156) s'étend parallèlement à l'une des surfaces de support (70, 80).

45. Support d'outil selon l'une des revendications 36 à 44, **caractérisé en ce que** l'élément de serrage (132) peut tourner autour d'un angle de moins de 270° afin de serrer le porte-outil (20).

46. Support d'outil selon l'une des revendications 36 à 45, **caractérisé en ce que** l'élément de serrage (132) comprend un évidement (154) situé devant une zone de départ (152) de la coulisse de serrage (142).

47. Support d'outil selon l'une des revendications 36 à 46, **caractérisé en ce que** la coulisse de serrage (142) porte la surface cunéiforme (150) sur un côté tourné vers l'axe de l'élément de serrage (132).

48. Support d'outil selon la revendication 47, **caractérisé en ce que** l'élément de serrage (132) comprend un cylindre creux, lequel forme avec une section de paroi la coulisse de serrage (142).

49. Support d'outil selon l'une des revendications 36 à 48, **caractérisé en ce qu'**une surface de support (70, 80) du corps de retenue (22) comprend des surfaces partielles (70a, b ; 80a, b), qui se situent des deux côtés d'un canal d'introduction (90) s'étendant dans la direction d'introduction pour un corps de serrage (124).

50. Support d'outil selon la revendication 49, **caractérisé en ce que** les deux surfaces de support (70, 80) sont séparées et chacune des surfaces de support (70, 80) comprend des surfaces partielles (70a, b ; 80a, b) situées des deux côtés du canal d'introduction (90).

51. Support d'outil selon l'une des revendications 36 à 50, **caractérisé en ce que** la direction de serrage (160) s'étend parallèlement à une direction qui se situe à l'intérieur de la zone angulaire (α) délimitée par les surfaces de support (70, 80).

52. Support d'outil selon l'une des revendications 36 à 51, **caractérisé en ce que** le corps de retenue (22) est relié par adhérence à l'unité de base (10).

53. Support d'outil selon la revendication 52, **caractérisé en ce que** l'unité de base (10) et le corps de retenue (22) peuvent être orientés l'un par rapport à l'autre par l'intermédiaire d'éléments de conjugaison de forme (24, 30) et **en ce que** les éléments de conjugaison de forme (24, 30) sont fixés par adhérence l'un par rapport à l'autre à l'encontre d'un déplacement relatif.

54. Support d'outil selon la revendication 52 ou 53, **caractérisé en ce que** l'unité de base (10) et le corps de retenue (22) sont fixés l'un sur l'autre par adhérence par l'intermédiaire de griffes de serrage (44) s'appliquant sur l'unité de base (10) et sur le corps de retenue (22).

55. Support d'outil selon la revendication 54, **caractérisé en ce qu'**il est prévu dans la zone d'au moins un point d'attaque (36, 40) des griffes de serrage (44) une surface oblique (42), par l'intermédiaire de laquelle les griffes de serrage (44) créent une force réalisant l'adhérence.

56. Support d'outil selon l'une des revendications 36 à 55, **caractérisé en ce que** l'unité de base (10) est réalisée comme un arbre de support (12) et le corps de retenue comme un plateau d'outil (22) d'une tourelle d'outil.

57. Support d'outil selon la revendication 56, **caractérisé en ce que** l'arbre de support (12) est réalisé comme un arbre creux et **en ce que** les griffes de serrage (44) agissent dans la direction radiale de l'arbre creux (12), afin de serrer le plateau d'outil (22) et l'arbre creux (12) dans la direction axiale.
